# FASCICULE DE BREVET EUROPEEN

(11) **EP 3 487 367 B1**
(45) Date de publication et mention de la délivrance du brevet: **12.08.2020**
(21) Numéro de dépôt: 17754748.6
(22) Date de dépôt: 21.07.2017
(51) Int. Cl.: A47J 27/08, A23L 5/10, A23L 7/10, A47J 36/20

(54) **MÉTHODE DE CONTRÔLE DE CUISEUR ÉLECTRIQUE**
VERFAHREN ZUR STEUERUNG EINES ELEKTRISCHEN KOCHERS
METHOD FOR CONTROLLING AN ELECTRIC COOKER

(30) Priorité: 22.07.2016 FR 1657066
(43) Date de publication de la demande: 29.05.2019
(73) Titulaire: SEB S.A., 69130 Ecully (FR)
(72) Inventeur: LV, Hua, Hangzhou Zhejiang 310051 (CN); MA, Chao, Hangzhou Zhejiang 310051 (CN); GOYON, Annabelle, 30980 saint-Dionisy (FR)
(74) Mandataire: Bourrières, Patrice
(86) Numéro de dépôt international: PCT/FR2017/052024
(87) Numéro de publication internationale: WO 2018/015695

(56) Documents cités:
- WO-A1-2014/019018
- WO-A1-2014/190160
- FR-A1- 2 899 783
- US-A1- 2007 158 339

## Description

La présente invention concerne le domaine des technologies de cuisson ; elle concerne concrètement une méthode de contrôle de cuiseur électrique.

Dans les cuiseurs électriques actuels équipés d'un récipient interne, on place un panier à vapeur à l'intérieur du récipient interne, le riz est disposé dans le panier à vapeur et l'eau est disposée dans le récipient interne ; la méthode de contrôle actuelle des cuiseurs à riz consiste à employer le chauffage de l'eau se trouvant dans le récipient interne pour la porter à ébullition, laquelle ébullition de l'eau entraîne le contact de l'eau et du riz se trouvant dans le panier à vapeur et ainsi l'absorption de l'eau par le riz ; ensuite seulement le riz est cuit à la vapeur de manière à obtenir un riz à indice glycémique (IG) bas.

Le document FR 2 899 783 A1 décrit une telle méthode de contôle de cuiseur électrique.

Cependant, les méthodes actuelles de contrôle de cuiseurs à riz ne permettent pas de garantir qu'une quantité suffisante d'eau entre dans le panier à vapeur, ce qui conduit à l'impossibilité pour une partie du riz d'entrer en contact avec l'eau et donc à l'impossibilité de procéder efficacement au rinçage du riz et à l'absorption de l'eau par le riz, ce qui affecte en définitive la texture en bouche du riz obtenu ; en outre, les méthodes actuelles de contrôle de cuiseurs à riz ne permettent pas non plus de garantir la bonne réalisation du processus de séparation de l'eau et du riz, l'eau n'emportant par rinçage le sucre contenu dans le riz qu'en faible quantité, ce qui rend difficile l'obtention d'un riz à indice glycémique (IG) bas.

L'objectif de la présente invention est de proposer une méthode de contrôle de cuiseur électrique qui permette de réduire efficacement l'indice glycémique (IG) du riz, d'améliorer la texture en bouche du riz et de rendre l'usage du cuiseur à riz automatique, rapide et pratique grâce à un contrôle efficace.

Cet objectif est atteint par l'intermédiaire d'une méthode de contrôle de cuiseur électrique, caractérisée en ce que le cuiseur électrique comporte un récipient interne, un élément chauffant et, installé à l'intérieur dudit récipient interne, un panier à vapeur ; ledit élément chauffant chauffe ledit récipient interne; la partie inférieure dudit panier à vapeur comporte un mécanisme d'ouverture orienté vers la paroi de fond et/ou situé dans le prolongement de la paroi latérale du récipient interne; ledit panier à vapeur comprend une zone perméable et une chambre de remplissage située au-dessus de cette zone perméable ; l'espace d'ouverture entouré par le mécanisme d'ouverture est relié à la chambre de remplissage par l'entremise de ladite zone perméable ; la partie supérieure dudit panier à vapeur est reliée à l'ouverture du récipient interne; la méthode de contrôle dudit cuiseur électrique comporte les étapes suivantes :
- Une étape simultanée de rinçage et cuisson à l'eau du riz, dans laquelle l'élément chauffant chauffe de manière continue le récipient interne, et, une fois qu'une première durée programmée de chauffage est terminée, l'élément chauffant cesse de fonctionner, ceci pendant une seconde durée programmée, l'étape de rinçage et cuisson à l'eau du riz est répétée N1 fois.
- Une étape de cuisson du riz à la vapeur, pendant laquelle l'élément chauffant chauffe de manière continue le récipient interne, et, après qu'une troisième durée programmée de chauffage est terminée, l'élément chauffant cesse de fonctionner, ceci pendant une quatrième durée programmée, l'étape de cuisson à la vapeur du riz est répétée N2 fois.

Selon une autre variante, la première durée programmée est supérieure ou égale à 3 secondes et inférieure ou égale à 120 secondes, et la seconde durée programmée est supérieure ou égale à 3 secondes et inférieure ou égale à 120 secondes, et N1 est supérieur ou égal à 1 et inférieur ou égal à 100.

Selon une autre variante, l'étape de rinçage et cuisson à l'eau du riz comprend une phase préliminaire d'absorption de l'eau par le riz, et une phase accélérée d'absorption de l'eau par le riz, et une phase finale d'absorption de l'eau, de rinçage et de cuisson à l'eau du riz, avec :
- au cours de la phase préliminaire d'absorption de l'eau par le riz, l'étape de rinçage et cuisson à l'eau du riz étant répétée N11 fois ;
- au cours de la phase accélérée d'absorption de l'eau par le riz, l'étape de rinçage et cuisson à l'eau du riz étant répétée N12 fois ;
- au cours de la phase finale d'absorption de l'eau par le riz, l'étape de rinçage et cuisson à l'eau du riz étant répétée N13 fois, la somme de N11, N12 et N13 étant égale à N1, et N1 étant supérieur ou égal à 1 et inférieur ou égal à 100.

Selon une autre variante, la première durée programmée de la phase préliminaire d'absorption de l'eau par le riz est supérieure à la première durée programmée de la phase accélérée d'absorption de l'eau par le riz, et la première durée programmée de la phase accélérée d'absorption de l'eau par le riz est supérieure à la première durée programmée de la phase finale d'absorption de l'eau par le riz.

Selon une autre variante, la seconde durée programmée de la phase préliminaire d'absorption de l'eau par le riz est supérieure à la seconde durée programmée de la phase accélérée d'absorption de l'eau par le riz, et la seconde durée programmée de la phase accélérée d'absorption de l'eau par le riz est supérieure à la seconde durée programmée de la phase finale d'absorption de l'eau par le riz.

Selon une autre variante, lors de la phase préliminaire d'absorption de l'eau par le riz, de rinçage et de cuisson à l'eau du riz, la première durée programmée est supérieure ou égale à 3 secondes et inférieure ou égale à 120 secondes, et la seconde durée programmée est supérieure ou égale à 3 secondes et inférieure ou égale à 120 secondes, et N11 est supérieur ou égal à 1 et inférieur ou égal à 100.

Selon une autre variante, la troisième durée programmée est supérieure ou égale à 3 secondes et inférieure ou égale à 150 secondes, et la quatrième durée programmée est supérieure ou égale à 3 secondes et inférieure ou égale à 150 secondes, et le nombre de répétition de l'étape de cuisson du riz à la vapeur est supérieur ou égal à 1 et inférieur ou égal à 100.

Selon une autre variante, l'étape de cuisson à la vapeur du riz comprend une phase préliminaire et une phase finale de cuisson à la vapeur du riz, avec :
- au cours de la phase préliminaire de cuisson à la vapeur du riz, l'étape de cuisson à la vapeur du riz étant répétée N21 fois ;
- au cours de la phase finale de cuisson à la vapeur du riz, l'étape de cuisson à la vapeur du riz étant répétée N22 fois,
- la somme de N21 et N22 étant égale à N2, N2 étant supérieur ou égal à 1 et inférieur ou égal à 100.

Selon une autre variante, la troisième durée programmée de la phase préliminaire de cuisson à la vapeur du riz est inférieure à la troisième durée programmée de la phase finale de cuisson à la vapeur du riz.

Selon une autre variante, la quatrième durée programmée de la phase préliminaire de cuisson à la vapeur du riz est inférieure à la quatrième durée programmée de la phase finale de cuisson à la vapeur du riz.

Selon une autre variante, avant l'étape de rinçage et cuisson à l'eau du riz, le rapport entre le poids du riz se trouvant dans la chambre de remplissage et le poids de l'eau se trouvant dans le récipient interne est supérieur ou égal à 0,1 et inférieur ou égal à 3.

Selon une autre variante, avant l'étape de rinçage et de cuisson à l'eau du riz, le rapport entre le poids du riz se trouvant dans la chambre de remplissage et le poids de l'eau se trouvant dans le récipient interne est supérieur ou égal à 0,3 et inférieur ou égal à 1,2.

Selon une autre variante, ledit cuiseur électrique comporte encore un commutateur de régulation de la pression destiné à libérer la pression interne du compartiment formé par l'intervalle entre la surface externe du panier à vapeur et la paroi latérale interne du récipient interne, lorsqu'on met ce commutateur de régulation de la pression sur la position activée, ledit compartiment est relié à l'espace situé à l'extérieur du cuiseur électrique de sorte que l'eau se trouvant à l'intérieur de la chambre de remplissage soit évacuée plus rapidement.

De cette manière, le contrôle de la température de l'eau, du nombre de contacts entre l'eau et le riz et du temps de rétention de l'eau à l'intérieur de la chambre de remplissage permet au cuiseur électrique de réaliser de manière automatique le processus de rinçage du riz et d'absorption de l'eau par le riz, et en même temps le processus de cuisson à l'eau puis cuisson à la vapeur du riz à l'intérieur du cuiseur électrique, de manière que le cuiseur électrique cuise un riz à indice glycémique (IG) bas plus nutritif, et à augmenter le degré de satisfaction des consommateurs relativement au processus de cuisson. C'est pourquoi, la méthode de contrôle de la présente invention rend possible le contrôle efficace d'un cuiseur électrique multifonction, largement automatisé et hautement pratique.

Les figures annexes qui constituent une partie intégrante de la présente demande sont destinées à améliorer la compréhension de la présente invention, les exemples d'application schématique de la présente invention et leurs explications sont destinés à expliquer la présente invention, sans pour autant constituer de restriction inappropriée de la présente invention. Dans les figures annexes :
La figure 1 est le schéma structurel d'un cuiseur à riz selon un exemple d'application possible de la présente invention.
La figure 2 est le schéma d'assemblage du récipient interne et du panier à vapeur du cuiseur à riz de la figure 1.
La figure 3 est le schéma des principes de contrôle d'un cuiseur à riz selon un exemple d'application possible de la présente invention.

Il faut préciser qu'en l'absence d'incompatibilité, les exemples d'applications de la présente demande et les caractéristiques de ces exemples d'applications peuvent être mutuellement combinés. On va ci-dessous expliquer de manière concise la présente invention au moyen des dessins annexes de référence combinés à des exemples d'applications.

Il faut noter que les explications détaillées ci-dessous sont toutes fournies à titre d'exemples dans le but de fournir une explication plus poussée de la présente invention. Sauf mention contraire, tous les termes techniques et scientifiques employés ici ont l'acception courante telle qu'admise par le personnel technique ordinaire du domaine technique duquel relève la présente demande.

Dans la présente invention, en l'absence d'indication inverse, les termes de direction tels que "au-dessus, au-dessous, en haut de, en bas de" renvoient généralement aux orientations indiquées sur les figures annexes, ou bien renvoient aux directions verticales, perpendiculaires ou de la gravité des pièces elles-mêmes ; de même, afin de faciliter la compréhension et la description, "à l'intérieur de" et "à l'extérieur de" renvoient à l'intérieur ou l'extérieur de la silhouette de la pièce en question, toutefois, les termes de direction susmentionnés ne constituent en rien une limitation de la présente invention.

La présente invention propose une méthode de contrôle de cuiseur électrique destinée à réaliser le contrôle efficace des cuiseurs électriques de manière à réduire efficacement l'indice glycémique (IG) du riz, à améliorer la texture en bouche du riz et à rendre l'usage du cuiseur à riz automatique, rapide et pratique. Par méthode de contrôle de cuiseur électrique, on comprend un procédé de commande d'un cuiseur électrique.

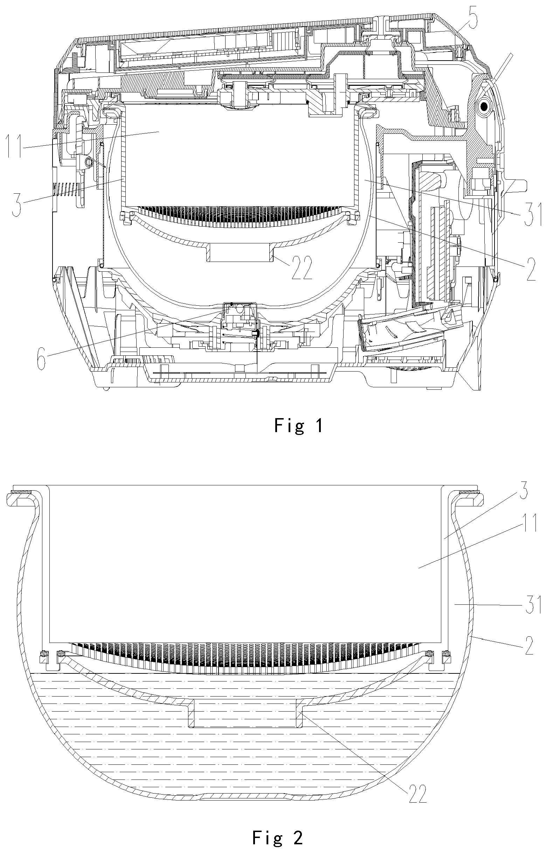

Un cuiseur électrique étant un cuiseur à riz tel que représenté sur les figures 1 et 2, qui comporte un récipient interne (2), un élément chauffant (6) et, installé à l'intérieur dudit récipient interne (2), un panier à vapeur (3) ; sous le panier à vapeur (3) se trouve un mécanisme d'ouverture (22) qui fait face au fond du récipient interne et/ou qui prolonge la paroi externe du récipient interne (2) ; le panier à vapeur (3) comprend une zone perméable et une chambre de remplissage (11) située au-dessus de cette zone perméable ; l'espace d'ouverture entouré par le mécanisme d'ouverture (22) est relié à la chambre de remplissage par l'entremise de ladite zone perméable ; la partie supérieure du panier à vapeur (3) est reliée à l'ouverture du récipient interne (2) de manière à ce que l'intervalle situé entre la surface extérieure du panier à vapeur (3) et la paroi interne du récipient interne (2) forme un compartiment (31).

Bien entendu, le cuiseur électrique de la présente invention peut également être un four micro-onde, un fait-tout électrique ou un cuiseur électrique sous pression.

Lors de l'utilisation de ce cuiseur électrique, au cours du processus ou de l'étape de rinçage et cuisson du riz, lorsque l'élément chauffant (6) chauffe le récipient interne (2), la pression à l'intérieur du compartiment (31) croît, l'eau se trouvant à l'intérieur du récipient interne (2) est, sous l'effet de la pression, envoyée à travers le mécanisme d'ouverture (22) jusque dans la chambre de remplissage (11) pour entrer en contact avec le riz ; après que l'élément chauffant (6) a cessé de fonctionner, la pression à l'intérieur du compartiment (31) baisse, l'eau se trouvant à l'intérieur de la chambre de remplissage (11) reflue hors de la chambre de remplissage (11) à travers le mécanisme d'ouverture (22) jusque dans le récipient interne (2). Et, lors du processus ou de l'étape de cuisson à la vapeur du riz, comme le riz a absorbé l'eau en grande quantité suite au chauffage qui a duré un certain temps, le niveau de l'eau baisse ; à ce moment-là, l'eau n'est plus en contact avec le riz, mais réalise la cuisson du riz sous la forme de vapeur.

Il faut préciser qu'afin d'accélérer le retour de l'eau jusque dans le récipient interne (2), le cuiseur électrique comporte un commutateur de régulation de la pression destiné à libérer la pression interne du compartiment (31), lorsque le commutateur de régulation de la pression est sur la position activée, le compartiment (31) est relié à l'espace situé à l'extérieur du cuiseur électrique de sorte que l'eau se trouvant à l'intérieur de la chambre de remplissage (11) soit évacuée plus rapidement.

Dans un exemple d'application non illustré dans les figures, le cuiseur électrique comporte encore un couvercle supérieur (5), et, une fois que le couvercle supérieur (5) est refermé, un canal de libération de la pression pouvant être relié au compartiment (31) se trouve sur le couvercle supérieur (5), et le commutateur de régulation de la pression sert à contrôler l'ouverture et la fermeture de ce canal de libération de la pression. Lorsqu'il faut faire monter la pression à l'intérieur du compartiment (31), le commutateur de régulation de la pression ferme le canal de libération de la pression, ceci afin de garantir l'élévation constante de la pression à l'intérieur du compartiment (31). Pour faire sortir l'eau de la chambre de remplissage (11), il faut ouvrir le commutateur de régulation de la pression, de sorte que le canal de libération de la pression et l'extérieur du cuiseur électrique soient reliés, ceci afin de libérer la pression interne.

Le commutateur de régulation de la pression peut être un clapet de non-retour ou une électrovalve.

Il est à préciser, avant d'utiliser le cuiseur électrique de la présente invention, qu'il faut commencer par placer le riz à l'intérieur de la chambre de remplissage (11) du panier à vapeur (3) et ajouter de l'eau dans le récipient interne (2).

Le rapport entre le poids G1 du riz se trouvant dans la chambre de remplissage (11) et le poids G2 de l'eau se trouvant dans le récipient interne (2) est supérieur ou égal à 0,1 et inférieur ou égal à 3.

Avec de préférence, le rapport entre le poids G1 du riz se trouvant dans la chambre de remplissage (11) et le poids G2 de l'eau se trouvant dans le récipient interne (2) est supérieur ou égal à 0,3 et inférieur ou égal à 1,2.

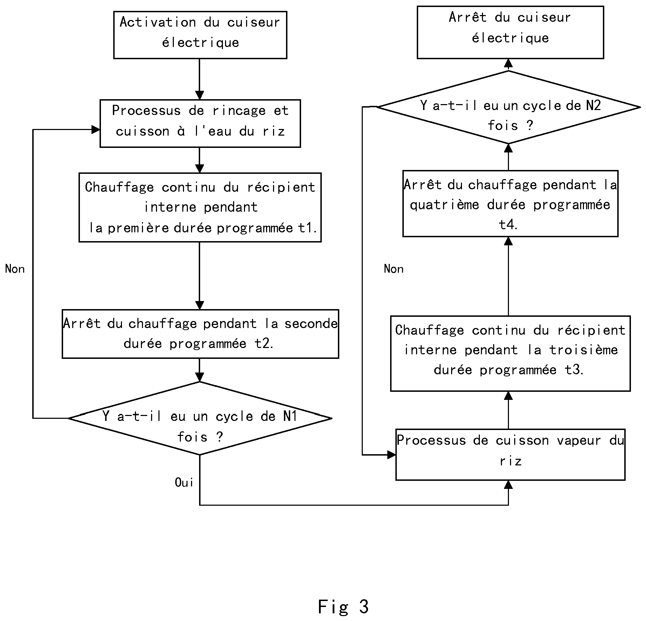

La figure 3 est le schéma des principes de contrôle d'un cuiseur à riz d'un exemple d'application possible de la présente invention. Une méthode de contrôle de cuiseur électrique comporte les étapes suivantes : après l'activation du cuiseur électrique, celui-ci entre dans le processus de rinçage et cuisson à l'eau du riz, et, lors processus de rinçage et cuisson à l'eau du riz, l'élément chauffant (6) chauffe de manière continue le récipient interne (2), et, une fois que la première durée programmée t1 de chauffage est terminée, l'élément chauffant (6) cesse de fonctionner, ceci pendant une seconde durée programmée t2, afin de terminer le processus de rinçage et cuisson à l'eau du riz en une fois, lequel processus de rinçage et cuisson à l'eau du riz est répété N1 fois. Selon l'invention, le rinçage et la cuisson du riz se déroule simultanément lors de cette étape.

Ensuite, lors du processus de cuisson du riz à la vapeur, l'élément chauffant (6) chauffe de manière continue le récipient interne (2), et, après que la troisième durée programmée t3 est terminée, l'élément chauffant (6) cesse de fonctionner, ceci pendant une quatrième durée programmée t4, afin de terminer le processus de cuisson à la vapeur du riz, lequel processus de cuisson à la vapeur du riz est répété N2 fois avant l'arrêt du cuiseur électrique.

L'élément chauffant (6) peut être une plaque chauffante, un tube chauffant, un dispositif chauffant électronique à induction ou un dispositif de chauffage à fil chauffant.

Lors du processus de rinçage et cuisson à l'eau du riz, l'élément chauffant (6) chauffe de sorte que la pression à l'intérieur du compartiment (31) est maintenue entre 5 Pa (pression absolue) et 5000 Pa (pression absolue).

Lors du processus de rinçage et cuisson à l'eau du riz en une fois, la première durée programmée t1 est supérieure ou égale à 3 secondes et inférieure ou égale à 120 secondes, et la seconde durée programmée t2 est supérieure ou égale à 3 secondes et inférieure ou égale à 120 secondes, et N1 est supérieur ou égal à 1 et inférieur ou égal à 100.

Dans un exemple d'application, lors du processus de rinçage et cuisson à l'eau du riz, la première durée programmée t1 est de 25 secondes, la seconde durée programmée t2 est de 6 secondes, et N1 est égal à 4. Ce processus de rinçage et cuisson à l'eau du riz est extrêmement régulier, à chaque fois la même durée de chauffage et la même durée d'arrêt du chauffage sont utilisées pour mener à bien le travail de cuisson.

Il faut préciser qu'étant donné que la température du riz qui n'est pas en contact avec de l'eau bouillante est relativement basse, lors du premier contact de l'eau bouillante avec le riz, la température de l'eau baisse rapidement et le niveau d'eau qui a monté baisse aussi rapidement.

Il faut préciser en complément qu'après l'activation du cuiseur électrique de la présente invention, l'élément chauffant (6) se trouve dans la première position de fonctionnement de manière à chauffer et porter à ébullition l'eau se trouvant dans le récipient interne (2) ; une fois portée à ébullition, l'eau se trouvant dans le récipient interne (2) est envoyée sous l'action de la pression à travers le mécanisme d'ouverture (22) jusque dans la chambre de remplissage (11) pour entrer en contact avec le riz ; une fois que le riz a été immergé dans l'eau, l'élément chauffant (6) repasse dans la seconde position de chauffage, la puissance de l'élément chauffant (6) dans la première position de fonctionnement étant supérieure à la puissance de l'élément chauffant (6) dans la seconde position de fonctionnement. On arrive ainsi à garantir que l'eau ne déborde pas suite à une ébullition excessive ; l'eau bouillante cuit de manière continue le riz, ce qui permet de raccourcir le temps de cuisson total du riz.

Dans un autre exemple d'application, afin de mieux réaliser le rinçage et la cuisson à l'eau du riz, l'ensemble du processus de rinçage et cuisson à l'eau du riz se fait selon une séquence temporelle que l'on peut diviser selon l'ordre suivant : phase préliminaire d'absorption de l'eau par le riz, de rinçage et de cuisson à l'eau du riz, phase accélérée d'absorption de l'eau par le riz, de rinçage et de cuisson à l'eau du riz et phase finale d'absorption de l'eau, de rinçage et de cuisson à l'eau du riz, avec : au cours de la phase préliminaire d'absorption de l'eau par le riz, de rinçage et de cuisson à l'eau du riz, le processus de rinçage et cuisson à l'eau du riz étant répété N11 fois ; au cours de la phase accélérée d'absorption de l'eau par le riz, de rinçage et de cuisson à l'eau du riz, le processus de rinçage et cuisson à l'eau du riz étant répété N12 fois ; au cours de la phase finale d'absorption de l'eau par le riz, de rinçage et de cuisson à l'eau du riz, le processus de rinçage et cuisson à l'eau du riz étant répété N13 fois, la somme de N11, N12 et N13 étant égale à N1, et N1 étant supérieur ou égal à 1 et inférieur ou égal à 100. De cette manière, l'échelonnement de la durée de chauffage permet de réaliser la cuisson du riz selon diverses durées et divers modes de cuisson pertinents, ceci afin de garantir la fiabilité de l'élévation du niveau de l'eau et d'éviter efficacement tout débordement d'eau à l'extérieur.

Concrètement, lors de la phase préliminaire d'absorption de l'eau par le riz, de rinçage et de cuisson à l'eau du riz, la première durée programmée t1 durant laquelle l'élément chauffant (6) procède au chauffage du récipient interne (2) du cuiseur électrique est t11 ; lors de la phase accélérée d'absorption de l'eau par le riz, de rinçage et de cuisson à l'eau du riz, la première durée programmée t1 durant laquelle l'élément chauffant (6) procède au chauffage du récipient interne (2) du cuiseur électrique est t12 ; lors de la phase finale d'absorption de l'eau par le riz, de rinçage et de cuisson à l'eau du riz, la première durée programmée t1 durant laquelle l'élément chauffant (6) procède au chauffage du récipient interne (2) du cuiseur électrique est t13, avec t11 étant supérieure à t12 et t12 étant supérieure à t13. Autrement dit, plus on avance dans le processus de cuisson, plus la durée de chauffage de chaque phase est réduite.

De même, lors de la phase préliminaire d'absorption de l'eau par le riz, de rinçage et de cuisson à l'eau du riz, la seconde durée programmée t2 durant laquelle l'élément chauffant (6) cesse de fonctionner est t21 ; lors de la phase accélérée d'absorption de l'eau par le riz, de rinçage et de cuisson à l'eau du riz, la seconde durée programmée t2 durant laquelle l'élément chauffant (6) cesse de fonctionner est t22 ; lors de la phase finale d'absorption de l'eau par le riz, de rinçage et de cuisson à l'eau du riz, la seconde durée programmée t2 durant laquelle l'élément chauffant (6) cesse de fonctionner est t23, avec t21 étant supérieure à t22 et t22 étant supérieure à t23. Autrement dit, plus on avance dans le processus de cuisson, plus la durée de l'arrêt du chauffage de chaque phase est réduite.

Lors de la phase préliminaire d'absorption de l'eau par le riz, de rinçage et de cuisson à l'eau du riz, la durée t11 est supérieure ou égale à 3 secondes et inférieure ou égale à 120 secondes, et la durée t21 est supérieure ou égale à 3 secondes et inférieure ou égale à 120 secondes, et N11 est supérieur ou égal à 1 et inférieur ou égal à 100. Etant donné que la température augmente après le contact entre l'eau et le riz, la chaleur devant être absorbée est moindre, afin d'éviter qu'un excès de pression à l'intérieur du compartiment (31) ne provoque la séparation du panier à vapeur (3) à l'intérieur du récipient interne (2) suite à la vibration ou bien le débordement de l'eau hors de la chambre de remplissage (11), la durée de chauffage continue du riz ne doit pas être trop longue.

Lors de la phase accélérée d'absorption de l'eau par le riz, de rinçage et de cuisson à l'eau du riz, la durée t12 est supérieure ou égale à 3 secondes et inférieure ou égale à 120 secondes, et la durée t22 est supérieure ou égale à 3 secondes et inférieure ou égale à 120 secondes, et N12 est supérieur ou égal à 1 et inférieur ou égal à 100. Etant donné qu'après la phase préliminaire d'absorption de l'eau, de rinçage et de cuisson à l'eau du riz, la température du riz est proche de celle de l'eau, lors de la phase accélérée d'absorption de l'eau, de rinçage et de cuisson à l'eau du riz, le temps de chauffage du riz est raccourci, et la quantité de chaleur absorbée par le riz est réduite.

Lors de la phase finale d'absorption de l'eau par le riz, de rinçage et de cuisson à l'eau du riz, la durée t13 est supérieure ou égale à 3 secondes et inférieure ou égale à 120 secondes, et la durée t23 est supérieure ou égale à 3 secondes et inférieure ou égale à 120 secondes, et N13 est supérieur ou égal à 1 et inférieur ou égal à 100. Après la phase accélérée d'absorption de l'eau par le riz, de rinçage et de cuisson à l'eau du riz, l'amidon du riz se précipite dans l'eau et l'eau commence à devenir collante. Le chauffage d'une eau à viscosité élevée est propice au débordement de l'eau hors de la chambre de remplissage (11), on peut alors réduire davantage la durée de chauffage du riz.

Dans un exemple d'application concret, au cours de la phase préliminaire d'absorption de l'eau, de rinçage et de cuisson à l'eau du riz t11 = 10 s, t21 = 6 s, N11 = 8 ; au cours de la phase accélérée d'absorption de l'eau, de rinçage et de cuisson à l'eau du riz t12 = 8 s, t22 = 8 s, N12 = 8 ; au cours de la phase finale d'absorption de l'eau, de rinçage et de cuisson à l'eau du riz t13 = 6 s, t23 = 8s, N13 = 10.

Une fois le processus de rinçage et cuisson à l'eau du riz terminé, le cuiseur électrique entre dans le processus ou l'étape de cuisson à la vapeur du riz.

Lors du processus de cuisson à la vapeur du riz en une fois, la troisième durée programmée t3 est supérieure ou égale à 3 secondes et inférieure ou égale à 150 secondes, et la quatrième durée programmée t4 est supérieure ou égale à 3 secondes et inférieure ou égale à 150 secondes, et N2 est supérieur ou égal à 1 et inférieur ou égal à 100. Ce processus de rinçage et cuisson à l'eau du riz est extrêmement régulier, à chaque fois la même durée de chauffage et la même durée d'arrêt du chauffage sont utilisées pour mener à bien le travail de cuisson.

Dans un autre exemple d'application, afin de mieux réaliser la cuisson à la vapeur du riz, l'ensemble du processus de cuisson à la vapeur du riz se fait selon une séquence temporelle que l'on peut diviser selon l'ordre suivant : phase préliminaire et phase finale de cuisson à la vapeur du riz, avec : au cours de la phase préliminaire de cuisson à la vapeur du riz, le processus de cuisson à la vapeur du riz étant répété N21 fois ; au cours de la phase finale de cuisson à la vapeur du riz, le processus de cuisson à la vapeur du riz étant répété N22 fois, la somme de N21 et N22 étant égale à N2, et N2 étant supérieur ou égal à 1 et inférieur ou égal à 100. De cette manière, l'échelonnement de la durée de chauffage permet de réaliser la cuisson du riz selon diverses durées et divers modes de cuisson pertinents, ceci afin de garantir la texture en bouche du riz ainsi cuit.

Concrètement, lors de la phase préliminaire de cuisson à la vapeur du riz, la troisième durée programmée t3 durant laquelle l'élément chauffant (6) procède au chauffage du récipient interne (2) du cuiseur électrique est t31 ; lors de la phase finale de cuisson à la vapeur du riz, la troisième durée programmée t3 durant laquelle l'élément chauffant (6) cesse de fonctionner est t32, t32 étant supérieure à t31.

De plus, lors de la phase préliminaire de cuisson à la vapeur du riz, la quatrième durée programmée t4 durant laquelle l'élément chauffant (6) cesse de fonctionner est t41 ; lors de la phase finale de cuisson à la vapeur du riz, la quatrième durée programmée t4 durant laquelle l'élément chauffant (6) cesse de fonctionner est t42, t42 étant supérieure à t41 ;

Lors de la phase préliminaire de cuisson à la vapeur du riz, la durée t31 est supérieure ou égale à 3 secondes et inférieure ou égale à 150 secondes, et la durée t41 est supérieure ou égale à 3 secondes et inférieure ou égale à 150 secondes, et N21 est supérieur ou égal à 1 et inférieur ou égal à 100. Lors de la phase préliminaire de cuisson à la vapeur du riz, afin de garantir une quantité de vapeur suffisante à l'intérieur du panier à vapeur (3) et faire en sorte que le riz se trouvant dans la chambre de remplissage (11) soit baigné d'une vapeur à haute température, il faut s'assurer en même temps que l'eau se trouvant dans le compartiment (31) ne monte pas pour entrer en contact avec le riz.

Lors de la phase finale de cuisson à la vapeur du riz, la durée t32 est supérieure ou égale à 3 secondes et inférieure ou égale à 150 secondes, et la durée t42 est supérieure ou égale à 3 secondes et inférieure ou égale à 150 secondes, et N22 est supérieur ou égal à 1 et inférieur ou égal à 100. Une fois la phase préliminaire de cuisson à la vapeur du riz terminée, la densité d'amidon dans l'eau se trouvant dans le récipient interne (2) a augmenté, cette eau, lorsqu'elle boue, a davantage tendance à générer des bulles d'air qui compriment l'eau du compartiment (31) vers la chambre de remplissage (11), aussi, afin d'éviter que l'eau se trouvant à l'intérieur du compartiment (31) ne monte, il faut réduire la pression à l'intérieur du compartiment (31) et contrôler la durée de chauffage.

Dans un exemple d'application concret, lors de la phase préliminaire de cuisson à la vapeur du riz, t31 = 5 s, t41 = 5s, N21 = 30 ; lors de la phase finale de cuisson à la vapeur du riz, t32 = 6 s, t42 = 8 s, N22 = 22.

Bien entendu, lors du processus de rinçage et cuisson à l'eau et du processus de cuisson à la vapeur du riz, la durée de marche et d'arrêt de l'élément chauffant (6) n'est pas forcément entièrement régulière. Autrement dit, la durée de chauffage ou d'arrêt de l'élément chauffant (6) peut être optimisée en fonction de l'évolution de la cuisson, de sorte que la durée de chauffage et la durée d'arrêt de l'élément chauffant (6) soient pour chaque cycle différentes de celles du cycle précédent.

Concrètement, le Tableau 1 présente une méthode de contrôle du processus de rinçage et cuisson à l'eau du riz par le cuiseur électrique ; et le Tableau 2 présente une méthode de contrôle du processus de cuisson à la vapeur du riz par le cuiseur électrique.

**Tableau 1. Méthode de contrôle du processus de rinçage et cuisson à l'eau du riz par le cuiseur électrique**

| | Processus de rinçage et cuisson à l'eau du riz | | | | | |
|---|---|---|---|---|---|---|
| Nombre de fois | Absorption de l'eau préalable Phase de cuisson à l'eau du riz | | Absorption rapide de l'eau Phase de cuisson à l'eau du riz | | Absorption finale de l'eau Phase de cuisson à l'eau du riz | |
| | t11 (secondes) | t21 (secondes) | t12 (secondes) | t22 (secondes) | t13 (secondes) | t23 (secondes) |
| 1 | 108 | 120 | 50 | 32 | 30 | 15 |
| 2 | 120 | 98 | 40 | 20 | 18 | 12 |
| 3 | 90 | 80 | 42 | 28 | 12 | 7 |
| 4 | 85 | 71 | 28 | 18 | 3 | 3 |

**Tableau 2. Méthode de contrôle du processus de cuisson à la vapeur du riz par le cuiseur électrique**

| | Processus de cuisson à la vapeur du riz | | | |
|---|---|---|---|---|
| Nombre de fois | Phase préliminaire de cuisson à la vapeur du riz | | Phase finale de cuisson à la vapeur du riz | |
| | t31 (secondes) | t41 (secondes) | t32 (secondes) | t42 (secondes) |
| 1 | 3 | 12 | 68 | 3 |
| 2 | 88 | 25 | 90 | 40 |
| 3 | 98 | 45 | 105 | 60 |
| 4 | 110 | 60 | 125 | 88 |
| 5 | 150 | 80 | 130 | 90 |

L'usage du cuiseur électrique ayant la structure susmentionnée et le contrôle du processus de fonctionnement du cuiseur électrique selon la méthode de contrôle susmentionnée permettent au cuiseur électrique de disposer des fonctions de trempage du riz, de cuisson à l'eau et de cuisson à la vapeur du riz, ainsi que d'autres fonctions. Dans un même temps, le riz cuit de cette manière possède une faible teneur en sucre, ce qui permet d'accroître le niveau de satisfaction de l'utilisateur.

Il faut noter que les termes techniques employés ici sont uniquement destinés à décrire des modes d'applications concrets, et non à limiter les modes d'applications fournis à titre d'exemples selon la présente demande. Il faut aussi comprendre que l'usage dans la description des termes "comporter" et/ou "inclure" implique qu'il existe des caractéristiques, étapes, tâches, composants, pièces et/ou des éléments les constituant.

Il faut préciser que les termes techniques "premier(ère)" et "second(e)" employés dans la description, les revendications, et les figures annexes de la présente demande servent à distinguer des phénomènes semblables et non à décrire une séquence spécifique ou un ordre d'antériorité-postériorité. Il faut comprendre que les données utilisées ainsi peuvent, dans des conditions appropriées, être interchangées.

Les exemples mentionnés plus haut constituent uniquement des exemples d'applications préférables de la présente invention, ils ne constituent en rien une restriction à la présente invention.

## Revendications

1. Méthode de contrôle de cuiseur électrique, lequel comporte un récipient interne (2), un élément chauffant (6) et, installé à l'intérieur dudit récipient interne (2), un panier à vapeur (3) ; ledit élément chauffant (6) chauffe ledit récipient interne (2) ; la partie inférieure dudit panier à vapeur (3) comporte un mécanisme d'ouverture (22) orienté vers la paroi de fond et/ou situé dans le prolongement de la paroi latérale du récipient interne (2) ; ledit panier à vapeur (3) comprend une zone perméable et une chambre de remplissage (11) située au-dessus de cette zone perméable ; l'espace d'ouverture entouré par le mécanisme d'ouverture (22) est relié à la chambre de remplissage (11) par l'entremise de ladite zone perméable ; la partie supérieure dudit panier à vapeur (3) est reliée à l'ouverture du récipient interne (2) ; la méthode de contrôle dudit cuiseur électrique **caractérisée par** les étapes suivantes :
- une étape simultanée de rinçage et cuisson à l'eau du riz, dans laquelle l'élément chauffant (6) chauffe de manière continue le récipient interne (2), et, une fois qu'une première durée programmée t1 de chauffage est terminée, l'élément chauffant (6) cesse de fonctionner, ceci pendant une seconde durée programmée t2, l'étape de rinçage et cuisson à l'eau du riz est répétée N1 fois.
- Une étape de cuisson du riz à la vapeur, pendant laquelle l'élément chauffant (6) chauffe de manière continue le récipient interne (2), et, après qu'une troisième durée programmée t3 de chauffage est terminée, l'élément chauffant (6) cesse de fonctionner, ceci pendant une quatrième durée programmée t4, l'étape de cuisson à la vapeur du riz est répétée N2 fois.

2. Méthode de contrôle de cuiseur électrique selon la revendication 1, **caractérisée en ce que** la première durée programmée t1 est supérieure ou égale à 3 secondes et inférieure ou égale à 120 secondes, et la seconde durée programmée t2 est supérieure ou égale à 3 secondes et inférieure ou égale à 120 secondes, et N1 est supérieur ou égal à 1 et inférieur ou égal à 100.

3. Méthode de contrôle de cuiseur électrique selon la revendication 1 ou 2, **caractérisée en ce que** l'étape de rinçage et cuisson à l'eau du riz comprend une phase préliminaire d'absorption de l'eau par le riz, et une phase accélérée d'absorption de l'eau par le riz, et une phase finale d'absorption de l'eau, de rinçage et de cuisson à l'eau du riz, avec :
- au cours de la phase préliminaire d'absorption de l'eau par le riz, l'étape de rinçage et cuisson à l'eau du riz étant répétée N11 fois ;
- au cours de la phase accélérée d'absorption de l'eau par le riz, l'étape de rinçage et cuisson à l'eau du riz étant répétée N12 fois ;
- au cours de la phase finale d'absorption de l'eau par le riz, l'étape de rinçage et cuisson à l'eau du riz étant répétée N13 fois, la somme de N11, N12 et N13 étant égale à N1, et N1 étant supérieur ou égal à 1 et inférieur ou égal à 100.

4. Méthode de contrôle de cuiseur électrique selon la revendication 3, **caractérisée en ce que**
- La première durée programmée t1 de la phase préliminaire d'absorption de l'eau par le riz est supérieure à la première durée programmée t1 de la phase accélérée d'absorption de l'eau par le riz,
- La première durée programmée t1 de la phase accélérée d'absorption de l'eau par le riz est supérieure à la première durée programmée t1 de la phase finale d'absorption de l'eau par le riz.

5. Méthode de contrôle de cuiseur électrique selon la revendication 4, **caractérisée en ce que**
- La seconde durée programmée t2 de la phase préliminaire d'absorption de l'eau par le riz est supérieure à la seconde durée programmée (t2) de la phase accélérée d'absorption de l'eau par le riz,
- La seconde durée programmée t2 de la phase accélérée d'absorption de l'eau par le riz est supérieure à la seconde durée programmée t2 de la phase finale d'absorption de l'eau par le riz.

6. Méthode de contrôle de cuiseur électrique selon la revendication 5, **caractérisée en ce que** lors de la phase préliminaire d'absorption de l'eau par le riz, la première durée programmée t1 est supérieure ou égale à 3 secondes et inférieure ou égale à 120 secondes, et la seconde durée programmée t2 est supérieure ou égale à 3 secondes et inférieure ou égale à 120 secondes, et N11 est supérieur ou égal à 1 et inférieur ou égal à 100.

7. Méthode de contrôle de cuiseur électrique selon l'une des revendications précédentes, **caractérisée en ce que** la troisième durée programmée t3 est supérieure ou égale à 3 secondes et inférieure ou égale à 150 secondes, et la quatrième durée programmée t4 est supérieure ou égale à 3 secondes et inférieure ou égale à 150 secondes, et le nombre de répétition N2 de l'étape de cuisson du riz à la vapeur est supérieur ou égal à 1 et inférieur ou égal à 100.

8. Méthode de contrôle de cuiseur électrique selon la revendication 1, **caractérisée en ce que** l'étape de cuisson à la vapeur du riz comprend une phase préliminaire et une phase finale de cuisson à la vapeur du riz, avec :
- au cours de la phase préliminaire de cuisson à la vapeur du riz, l'étape de cuisson à la vapeur du riz étant répétée N21 fois ;
- au cours de la phase finale de cuisson à la vapeur du riz, l'étape de cuisson à la vapeur du riz étant répétée N22 fois,
- la somme de N21 et N22 étant égale à N2, N2 étant supérieur ou égal à 1 et inférieur ou égal à 100.

9. Méthode de contrôle de cuiseur électrique selon la revendication 8, **caractérisée en ce que** la troisième durée programmée t3 de la phase préliminaire de cuisson à la vapeur du riz est inférieure à la troisième durée programmée t3 de la phase finale de cuisson à la vapeur du riz.

10. Méthode de contrôle de cuiseur électrique selon la revendication 9, **caractérisée en ce que** la quatrième durée programmée t4 de la phase préliminaire de cuisson à la vapeur du riz est inférieure à la quatrième durée programmée t4 de la phase finale de cuisson à la vapeur du riz.

11. Méthode de contrôle de cuiseur électrique selon l'une des revendications précédentes, **caractérisée en ce qu'**avant l'étape de rinçage et cuisson à l'eau du riz, le rapport entre le poids G1 du riz se trouvant dans la chambre de remplissage (11) et le poids G2 de l'eau se trouvant dans le récipient interne (2) est supérieur ou égal à 0,1 et inférieur ou égal à 3.

12. Méthode de contrôle de cuiseur électrique selon l'une des revendications 1 à 11, **caractérisée en ce qu'**avant l'étape de rinçage et de cuisson à l'eau du riz, le rapport entre le poids G1 du riz se trouvant dans la chambre de remplissage (11) et le poids G2 de l'eau se trouvant dans le récipient interne (2) est supérieur ou égal à 0,3 et inférieur ou égal à 1,2.

13. Méthode de contrôle de cuiseur électrique selon la revendication 1, **caractérisée en ce que** ledit cuiseur électrique comporte encore un commutateur de régulation de la pression destiné à libérer la pression interne du compartiment (31) formé par l'intervalle entre la surface externe du panier à vapeur (3) et la paroi latérale interne du récipient interne (2), lorsqu'on met ce commutateur de régulation de la pression sur la position activée, ledit compartiment (31) est relié à l'espace situé à l'extérieur du cuiseur électrique de sorte que l'eau se trouvant à l'intérieur de la chambre de remplissage (11) soit évacuée plus rapidement.

## Patentansprüche

1. Verfahren zur Überwachung eines elektrischen Kochers, wobei er einen internen Behälter (2), ein Heizelement (6) und in den internen Behälter (2) eingebaut einen Dampfkorb (3) aufweist; wobei das Heizelement (6) den internen Behälter (2) erwärmt; wobei der untere Teil des Dampfkorbs (3) einen Öffnungsmechanismus (22) aufweist, der zu der Bodenwand hin ausgerichtet ist und / oder sich in der Verlängerung der Seitenwand des internen Behälters (2) befindet; wobei der Dampfkorb (3) eine durchlässige Zone und eine Füllkammer (11) umfasst, die sich oberhalb dieser durchlässigen Zone befindet; wobei der von dem Öffnungsmechanismus (22) umgebene Öffnungsraum durch die durchlässige Zone mit der Füllkammer (11) verbunden ist; wobei der obere Teil des Dampfkorbs (3) mit der Öffnung des internen Behälters (2) verbunden ist; wobei das Verfahren zur Überwachung des elektrischen Kochers durch die folgenden Schritte gekennzeichnet ist:
- einen gleichzeitigen Schritt des Spülens und Kochens des Reises mit Wasser, wobei das Heizelement (6) den internen Behälter (2) kontinuierlich erwärmt, und wobei, sobald eine erste programmierte Dauer t1 des Erhitzens beendet ist, das Heizelement (6) aufhört zu arbeiten, dies für eine zweite programmierte Dauer t2, wobei der Schritt des Spülens und Kochens des Reises mit Wasser N1-mal wiederholt wird.
- einen Schritt des Dampfkochens von Reis, während dem das Heizelement (6) den internen Behälter (2) kontinuierlich erwärmt, und nach Beendigung einer dritten programmierten Heizdauer t3 das Heizelement (6) aufhört zu arbeiten, dies für eine vierte programmierte Zeit t4, wobei der Schritt des Dampfkochens von Reis N2-mal wiederholt wird.

2. Verfahren zur Überwachung eines elektrischen Kochers nach Anspruch 1, **dadurch gekennzeichnet, dass** die erste programmierte Dauer t1 größer oder gleich 3 Sekunden und kleiner oder gleich 120 Sekunden ist, und dass die zweite programmierte Dauer t2 größer oder gleich 3 Sekunden und kleiner oder gleich 120 Sekunden ist, und dass N1 größer oder gleich 1 und kleiner oder gleich 100 ist.

3. Verfahren zur Überwachung eines elektrischen Kochers nach Anspruch 1 oder 2, **dadurch gekennzeichnet, dass** der Schritt des Spülens und Kochens des Reises mit Wasser eine vorläufige Phase der Wasseraufnahme durch den Reis und eine beschleunigte Phase der Wasseraufnahme durch den Reis und eine letzte Phase der Wasseraufnahme durch den Reis, des Spülens und Kochens des Reises mit Wasser umfasst, wobei:
- während der vorläufigen Phase der Wasseraufnahme durch den Reis der Schritt des Spülens und Kochens des Reises mit Wasser N11-mal wiederholt wird;
- während der beschleunigten Phase der Wasseraufnahme durch den Reis der Schritt des Spülens und Kochens des Reises mit Wasser N12-mal wiederholt wird;
- während der letzten Phase der Wasseraufnahme durch den Reis der Schritt des Spülens und Kochens des Reises mit Wasser N13-mal wiederholt wird, wobei die Summe von N11, N12 und N13 gleich N1 ist, und wobei N1 größer oder gleich 1 und kleiner oder gleich 100 ist.

4. Verfahren zur Überwachung eines elektrischen Kochers nach Anspruch 3, **dadurch gekennzeichnet, dass**
- die erste programmierte Dauer t1 der vorläufigen Phase der Wasseraufnahme durch den Reis größer als die erste programmierte Dauer t1 der beschleunigten Phase der Wasseraufnahme durch den Reis ist,
- die erste programmierte Dauer t1 der beschleunigten Phase der Wasseraufnahme durch den Reis größer als die erste programmierte Dauer t1 der letzten Phase der Wasseraufnahme durch den Reis ist.

5. Verfahren zur Überwachung eines elektrischen Kochers nach Anspruch 4, **dadurch gekennzeichnet, dass**
- die zweite programmierte Dauer t2 der vorläufigen Phase der Wasseraufnahme durch den Reis größer als die zweite programmierte Dauer (t2) der beschleunigten Phase der Wasseraufnahme durch den Reis ist,
- die zweite programmierte Dauer t2 der beschleunigten Phase der Wasseraufnahme durch den Reis größer als die zweite programmierte Dauer t2 der letzten Phase der Wasseraufnahme durch den Reis ist.

6. Verfahren zur Überwachung eines elektrischen Kochers nach Anspruch 5, **dadurch gekennzeichnet, dass** während der vorläufigen Phase der Wasseraufnahme durch den Reis die erste programmierte Dauer t1 größer oder gleich 3 Sekunden und kleiner oder gleich 120 Sekunden ist, und dass die zweite programmierte Dauer t2 größer oder gleich 3 Sekunden und kleiner oder gleich 120 Sekunden ist, und dass N11 größer oder gleich 1 und kleiner oder gleich 100 ist.

7. Verfahren zur Überwachung eines elektrischen Kochers nach einem der vorhergehenden Ansprüche, **dadurch gekennzeichnet, dass** die dritte programmierte Dauer t3 größer oder gleich 3 Sekunden und kleiner oder gleich 150 Sekunden ist, und dass die vierte programmierte Dauer t4 größer oder gleich 3 Sekunden und kleiner als oder gleich 150 Sekunden ist, und dass die Anzahl der Wiederholungen N2 des Schritts des Dampfkochens des Reises größer oder gleich 1 und kleiner oder gleich 100 ist.

8. Verfahren zur Überwachung eines elektrischen Kochers nach Anspruch 1, **dadurch gekennzeichnet, dass** der Schritt des Dampfkochens des Reises eine vorläufige Phase und eine letzte Phase des Dampfkochens des Reises umfasst, wobei:
- während der vorläufigen Phase des Dampfkochens des Reises wird der Schritt des Dampfkochens des Reises N21-mal wiederholt;
- während der letzten Phase des Dampfkochens wird der Schritt des Dampfkochens des Reises N22-mal wiederholt,
- die Summe von N21 und N22 gleich N2 ist, wobei N2 größer oder gleich 1 und kleiner oder gleich 100 ist.

9. Verfahren zur Überwachung eines elektrischen Kochers nach Anspruch 8, **dadurch gekennzeichnet, dass** die dritte programmierte Dauer t3 der vorläufigen Phase des Dampfkochens des Reises kleiner als die dritte programmierte Dauer t3 der letzten Phase des Dampfkochens des Reises ist.

10. Verfahren zur Überwachung eines elektrischen Kochers nach Anspruch 9, **dadurch gekennzeichnet, dass** die vierte programmierte Dauer t4 der vorläufigen Phase des Dampfkochens des Reises kleiner als die vierte programmierte Dauer t4 der letzten Phase des Dampfkochens des Reises ist.

11. Verfahren zur Überwachung eines elektrischen Kochers nach einem der vorhergehenden Ansprüche, **dadurch gekennzeichnet, dass** vor dem Schritt des Spülens und Kochens des Reises mit Wasser das Verhältnis zwischen dem Gewicht G1 des Reises, der sich in der Füllkammer (11) befindet, und dem Gewicht G2 des Wassers, das sich in dem internen Behälter (2) befindet, größer oder gleich 0,1 und kleiner oder gleich 3 ist.

12. Verfahren zur Überwachung eines elektrischen Kochers nach einem der Ansprüche 1 bis 11, **dadurch gekennzeichnet, dass** vor dem Schritt des Spülens und Kochens des Reises mit Wasser das Verhältnis zwischen dem Gewicht G1 des Reises, der sich in der Füllkammer (11) befindet, und dem Gewicht G2 des Wassers, das sich in dem internen Behälter (2) befindet, größer oder gleich 0,3 und kleiner oder gleich 1,2 ist.

13. Verfahren zur Überwachung eines elektrischen Kochers nach Anspruch 1, **dadurch gekennzeichnet, dass** der elektrische Kocher ferner einen Druckregelschalter aufweist, der dazu bestimmt ist, den Innendruck des Abteils (31) abzulassen, das durch den Zwischenabstand zwischen der Außenfläche des Dampfkorbs (3) und der inneren Seitenwand des inneren Behälters (2) gebildet ist, wenn dieser Druckregelschalter auf die aktivierte Position gestellt ist, wobei das Abteil (31) mit dem Raum, der sich außerhalb des elektrischen Kochers befindet, verbunden ist, damit das Wasser, das sich in dem Inneren der Füllkammer (11) befindet, schneller abgeführt wird.

## Claims

1. Method for controlling an electric cooker, which comprises an inner container (2), a heating element (6) and, installed inside said inner container (2), a steam basket (3); said heating element (6) heats said inner container (2); the lower portion of said steam basket (3) comprises an opening mechanism (22) oriented towards the bottom wall and/or located in the extension of the lateral wall of the inner container (2); said steam basket (3) comprises a permeable zone and a filling chamber (11) located above this permeable zone; the opening space surrounded by the opening mechanism (22) is connected to the filling chamber (11) through said permeable zone; the upper portion of said steam basket (3) is connected to the opening of the inner container (2); the method for controlling said electric cooker **characterised by** the following steps:
- a simultaneous step of rinsing and cooking the rice in water, wherein the heating element (6) continuously heats the inner container (2), and, once a first programmed period t1 of heating has ended, the heating element (6) stops operating, this during a second programmed period t2, the step of rinsing and cooking the rice in water is repeated N1 times.
- A step of steam cooking the rice, during which the heating element (6) continuously heats the inner container (2), and, after a third programmed period t3 of heating has ended, the heating element (6) stops operating, this during a fourth programmed period t4, the step of steam cooking the rice is repeated N2 times.

2. Method for controlling an electric cooker according to claim 1, **characterised in that** the first programmed period t1 is greater than or equal to 3 seconds and less than or equal to 120 seconds, and the second programmed period t2 is greater than or equal to 3 seconds and less than or equal to 120 seconds, and N1 is greater than or equal to 1 and less than or equal to 100.

3. Method for controlling an electric cooker according to claim 1 or 2, **characterised in that** the step of rinsing and cooking the rice in water comprises a preliminary phase of absorption of the water by the rice, and an accelerated phase of absorption of the water by the rice, and a final phase of absorption of the water, of rinsing and cooking the rice in water, with:
- during the preliminary phase of absorption of the water by the rice, the step of rinsing and cooking the rice in water being repeated N11 times;
- during the accelerated phase of absorption of the water by the rice, the step of rinsing and cooking the rice in water being repeated N12 times;
- during the final phase of absorption of the water by the rice, the step of rinsing and cooking the rice in water being repeated N13 times, the sum of N11, N12 and N13 being equal to N1, and N1 being greater than or equal to 1 and less than or equal to 100.

4. Method for controlling an electric cooker according to claim 3, **characterised in that**
- The first programmed period t1 of the preliminary phase of absorption of the water by the rice is greater than the first programmed period t1 of the accelerated phase of absorption of the water by the rice,
- The first programmed period t1 of the accelerated phase of absorption of the water by the rice is greater than the first programmed period t1 of the final phase of absorption of the water by the rice.

5. Method for controlling an electric cooker according to claim 4, **characterised in that**
- The second programmed period t2 of the preliminary phase of absorption of the water by the rice is greater than the second programmed period (t2) of the accelerated phase of absorption of the water by the rice,
- The second programmed period t2 of the accelerated phase of absorption of the water by the rice is greater than the second programmed period t2 of the final phase of absorption of the water by the rice.

6. Method for controlling an electric cooker according to claim 5, **characterised in that** during the preliminary phase of absorption of the water by the rice, the first programmed period t1 is greater than or equal to 3 seconds and less than or equal to 120 seconds, and the second programmed period t2 is greater than or equal to 3 seconds and less than or equal to 120 seconds, and N11 is greater than or equal to 1 and less than or equal to 100.

7. Method for controlling an electric cooker according to one of the preceding claims, **characterised in that** the third programmed period t3 is greater than or equal to 3 seconds and less than or equal to 150 seconds, and the fourth programmed period t4 is greater than or equal to 3 seconds and less than or equal to 150 seconds, and the number of repetitions N2 of the step of steam cooking the rice is greater than or equal to 1 and less than or equal to 100.

8. Method for controlling an electric cooker according to claim 1, **characterised in that** the step of steam cooking the rice comprises a preliminary phase and a final phase of steam cooking the rice, with:
- during the preliminary phase of steam cooking the rice, the step of steam cooking the rice being repeated N21 times;
- during the final phase of steam cooking the rice, the step of steam cooking the rice being repeated N22 times,
- the sum of N21 and N22 being equal to N2, N2 being greater than or equal to 1 and less than or equal to 100.

9. Method for controlling an electric cooker according to claim 8, **characterised in that** the third programmed period t3 of the preliminary phase of steam cooking the rice is less than the third programmed period t3 of the final phase of steam cooking the rice.

10. Method for controlling an electric cooker according to claim 9, **characterised in that** the fourth programmed period t4 of the preliminary phase of steam cooking the rice is less than the fourth programmed period t4 of the final phase of steam cooking the rice.

11. Method for controlling an electric cooker according to one of the preceding claims, **characterised in that** before the step of rinsing and cooking the rice in water, the ratio between the weight G1 of the rice that is in the filling chamber (11) and the weight G2 of the water that is in the inner container (2) is greater than or equal to 0.1 and less than or equal to 3.

12. Method for controlling an electric cooker according to one of claims 1 to 11, **characterised in that** before the step of rinsing and cooking the rice in water, the ratio between the weight G1 of the rice that is in the filling chamber (11) and the weight G2 of the water that is in the inner container (2) is greater than or equal to 0.3 and less than or equal to 1.2.

13. Method for controlling an electric cooker according to claim 1, **characterised in that** said electric cooker further comprises a pressure regulating switch intended to release the internal pressure of the compartment (31) formed by the interval between the outer surface of the steam basket (3) and the lateral inner wall of the inner container (2), when this pressure regulating switch is set to the activated position, said compartment (31) is connected to the space located outside the electric cooker in such a way that the water that is inside the filling chamber (11) is removed faster.
